Europäisches Patentamt

European Patent Office

Office européen des brevets

(11) Veröffentlichungsnummer : **0 432 229 B1**

(12) **EUROPÄISCHE PATENTSCHRIFT**

(45) Veröffentlichungstag der Patentschrift :
**11.11.92 Patentblatt 92/46**

(21) Anmeldenummer : **90906873.6**

(22) Anmeldetag : **14.05.90**

(86) Internationale Anmeldenummer :
**PCT/DE90/00345**

(87) Internationale Veröffentlichungsnummer :
**WO 90/15240 13.12.90 Gazette 90/28**

(51) Int. Cl.⁵ : **F02M 55/02, F16L 37/12**

(54) **KRAFTSTOFFEINSPRITZEINRICHTUNG FÜR BRENNKRAFTMASCHINEN.**

(30) Priorität : **06.06.89 DE 3918410**

(43) Veröffentlichungstag der Anmeldung :
**19.06.91 Patentblatt 91/25**

(45) Bekanntmachung des Hinweises auf die
Patenterteilung :
**11.11.92 Patentblatt 92/46**

(84) Benannte Vertragsstaaten :
**DE ES FR GB IT**

(56) Entgegenhaltungen :
**DE-A- 3 014 066**
**DE-A- 3 152 702**
**DE-A- 3 428 597**
**US-A- 4 823 754**

(73) Patentinhaber : **ROBERT BOSCH GMBH**
**Postfach 30 02 20**
**W-7000 Stuttgart 30 (DE)**

(72) Erfinder : **BASSLER, Helmut**
**Frankenstr. 5**
**W-7056 Weinstadt (DE)**
Erfinder : **NAEGER, Thomas**
**Lerchenstr. 20**
**W-7141 Schwieberdingen (DE)**

EP 0 432 229 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

### Stand der Technik

Die Erfindung geht aus von einer Kraftstoffeinspritzeinrichtung für Brennkraftmaschinen der im Oberbegriff des Anspruchs 1 definierten Gattung.

Bei einer bekannten Kraftstoffeinspritzeinrichtung dieser Art (DE 34 28 597 C2) ist das Verbindungsglied als U-förmige Federklammer ausgebildet, deren Steg quer zur Längserstreckung des Kraftstoffeinspritzventils verläuft und deren Schenkel einerseits mit am Rand radial einwärts gebogenen Lappen in eine Umfangsnut am Ventilgehäuse des Kraftstoffeinspritzventils eingreifen und andererseits Durchbrechungen aufweisen, in die der Verriegelungsbund am Anschlußstutzen einrastbar ist. Zur radialen Fixierung der Federklammer in der Umfangsnut des Ventilgehäuses weisen die Lappen kreisbogenförmig und konkav verlaufende Abschnitte auf, deren Radius dem der Umfangsnut entspricht. Bei der Montage wird zuerst die Federklammer auf das Kraftstoffeinspritzventil aufgeschoben, wobei die Schenkel mit ihren Lappen in die Umfangsnut einrasten. Dann wird das mit der Federklammer versehene Kraftstoffeinspritzventil axial in den Anschlußstutzen eingeschoben. Damit die Schenkel über den Verriegelungsbund gleiten können, sind diese in Einsteckrichtung nach außen abgewinkelt und werden von dem Verriegelungsbund beim Einstecken aufgespreizt. Sobald der Verriegelungsbund in die Durchbrechungen eingerastet ist, springen die Schenkel wieder in ihre Ausgangsstellung zurück.

Bei einer solchen Kraftstoffeinspritzeinrichtung ist zwar eine axiale Sicherung der Kraftstoffeinspritzventile gegen unbeabsichtigtes Abziehen von dem Kraftstoffverteiler gegeben, nicht jedoch eine Sicherung gegen Verdrehung der Kraftstoffeinspritzventile in Umfangsrichtung, wie diese z.B. bei der Montage oder beim Aufstecken oder Abziehen der Anschlußkabel für die Kraftstoffeinspritzventile auftreten kann. Bei Verwendung von sog. Mehrstrahl-Kraftstoffeinspritzventilen ist jedoch eine genaue Positionierung der einzelnen Strahlebenen der Kraftstoffeinspritzventile zur Ansauggeometrie der Brennkraftmaschine erforderlich, die nicht verändert werden darf; denn jede Abweichung von dieser Position durch Verdrehung in Umfangsrichtung führt zu einer Verschlechterung der Gemischaufbereitung.

### Vorteile der Erfindung

Die erfindungsgemäße Kraftstoffeinspritzeinrichtung mit den kennzeichnenden Merkmalen des Anspruchs 1 hat den Vorteil, daß die in den Anschlußstutzen eingesetzten und mittels der Verbindungsglieder gehaltenen Kraftstoffeinspritzventile in Umfangsrichtung toleranzmäßig genau eingebaut sind und ein Verdrehen durch einfache Krafteinwirkung von außen, z.B. durch Aufstecken oder Abziehen der Anschlußkabel, nicht mehr möglich ist. Die Verbindungsglieder lassen sich einfach fertigen und ermöglichen eine leichte und automatische Montage. Die Formelemente an den Kraftstoffeinspritzventilen und an den Anschlußstutzen können bereits im Formwerkzeug berücksichtigt werden und führen nicht zu nennenswerten Mehrkosten in der Fertigung. Die richtige Positionierung der Kraftstoffeinspritzventile bezüglich der Ansauggeometrie der Brennkraftmaschine ist auch nach Demontage zu Servicezwecken hochgenau reproduzierbar und wird auch unter rauhen Betriebsbedingungen zuverlässig eingehalten.

Durch die in den weiteren Ansprüchen aufgeführten Maßnahmen sind vorteilhafte Weiterbildungen und Verbesserungen der im Anspruch 1 angegebenen Kraftstoffeinspritzeinrichtung möglich.

### Zeichnung

Die Erfindung ist anhand von in der Zeichnung dargestellten Ausführungsbeispielen in der nachfolgenden Beschreibung näher erläutert. Es zeigen:

Fig. 1 ausschnittweise eine Seitenansicht einer Kraftstoffeinspritzeinrichtung, teilweise geschnitten,

Fig. 2 eine Ansicht der Kraftstoffeinspritzeinrichtung in Richtung Pfeil II in Fig. 1,

Fig. 3 eine Vorderansicht eines Verbindungsglieds zwischen Kraftstoffeinspritzventil und Kraftstoffverteiler in der Kraftstoffeinspritzeinrichtung in Fig. 1 und 2,

Fig. 4 eine Seitenansicht des Verbindungsglieds in Fig. 3,

Fig. 5 eine Draufsicht des Verbindungsglieds in Fig. 3,

Fig. 6 eine gleiche Ansicht wie in Fig. 2 einer Kraftstoffeinspritzeinrichtung gemäß einem weiteren Ausführungsbeispiel bei entfernten Kraftstoffeinspritzventilen,

Fig. 7 einen Schnitt längs der Linie VII-VII in Fig. 6,

Fig. 8 eine Seitenansicht einer Kraftstoffeinspritzeinrichtung gemäß einem dritten Ausführungsbeispiel,

Fig. 9 eine Ansicht der Kraftstoffeinspritzeinrichtung gemäß Pfeil IX in Fig. 8,

Fig. 10 eine Unteransicht der Kraftstoffeinspritzeinrichtung in Fig. 8 bei entferntem Kraftstoffeinspritzventil,

Fig. 11 eine Vorderansicht eines Verbindungsglieds in der Kraftstoffeinspritzeinrichtung gemäß Fig. 8 - 10,

Fig. 12 eine Seitenansicht des Verbindungsglieds in Fig. 11,

Fig. 13 eine Draufsicht des Verbindungsglieds in Fig. 11.

Beschreibung der Ausführungsbeispiele

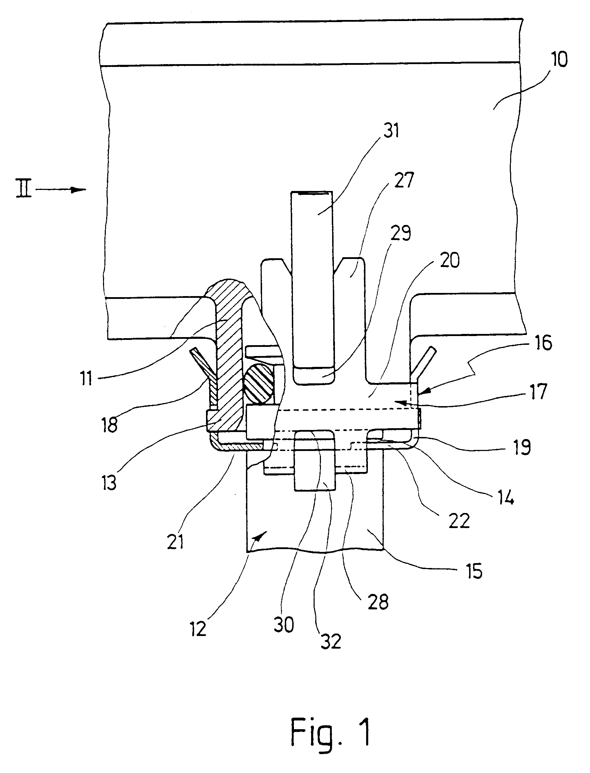

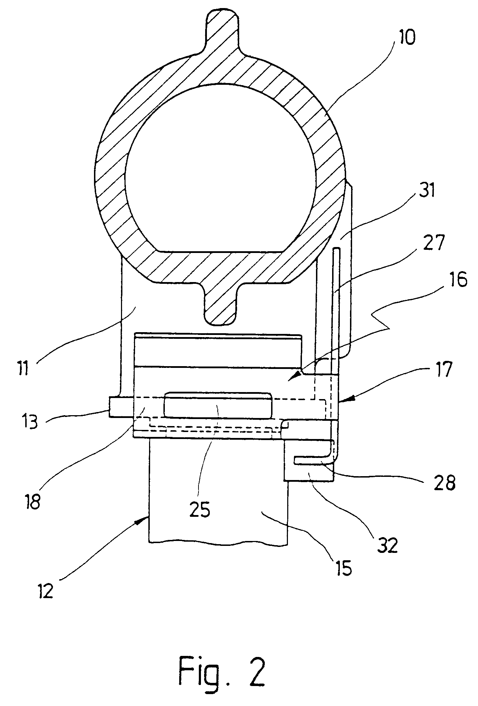

Die in Fig. 1 und 2 in zwei verschiedenen Seitenansichten, teilweise geschnitten und ausschnittweise dargestellte Kraftstoffeinspritzeinrichtung für Brennkraftmaschinen weist einen Kraftstoffverteiler 10 aus Kunststoff, der eine Mehrzahl von Anschlußstutzen 11 trägt und eine gleiche Anzahl von Kraftstoffeinspritzventilen 12 mit einer an einem Stirnende vorhandenen Anschlußöffnung zur Kraftstoffversorgung auf. Solche Kraftstoffeinspritzventile 12 werden allgemein top-feed-Ventile genannt. Die Anzahl der Anschlußstutzen 11 am Kraftstoffverteiler 10 und die gleiche Anzahl der Kraftstoffeinspritzventile 12 richtet sich nach der Anzahl der zu versorgenden Zylinder der Brennkraftmaschine. Bei einer vierzylindrigen Brennkraftmaschine sind somit vier Kraftstoffeinspritzventile 12 vorzusehen, die jeweils in einen von vier Anschlußstutzen 11 am Kraftstoffverteiler 10 flüssigkeitsdicht eingesetzt werden.

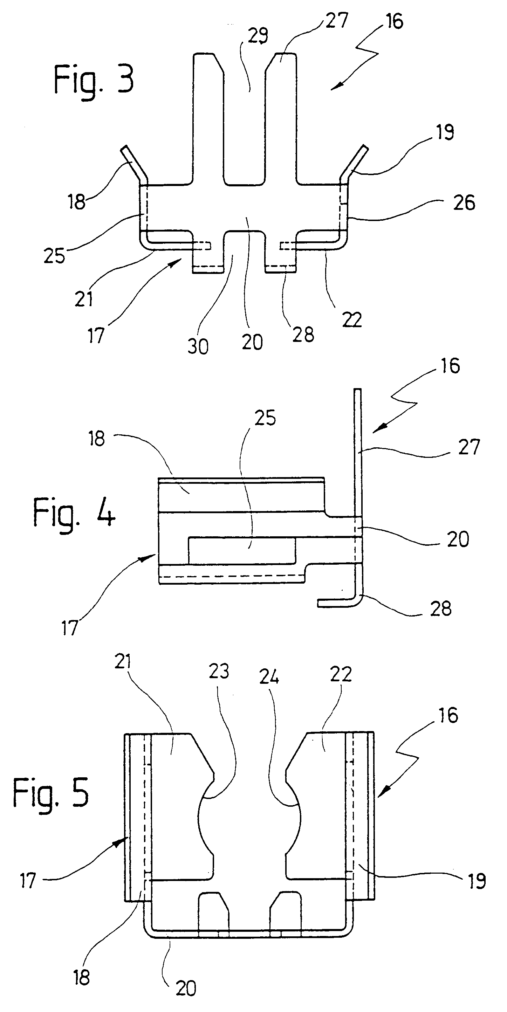

Zur Halterung der Kraftstoffeinspritzventile 12 ist jeder Anschlußstutzen 11 am freien Stirnende mit einem radial überstehenden Verriegelungsbund 13 und jedes Kraftstoffeinspritzventil 12 mit einer Umfangsnut 14 in seinem Ventilgehäuse 15 versehen, sowie für jedes Kraftstoffeinspritzventil 12 ein Verbindungsglied 16 vorgesehen, das einerseits in die Umfangsnut 14 eingreift und andererseits den Verriegelungsbund 13 übergreift. Ein Ausführungsbeispiel eines solchen Verbindungsglieds 16 ist in Fig. 3 - 5 dargestellt. Es wird von einer etwa U-förmigen Federklammer 17 gebildet, die aus einem Blechstanzteil gefertigt ist. Die Federklammer 17 weist zwei Federschenkel 18,19 und einen diese verbindenden Federsteg 20 auf. Federschenkel 18,19 und Federsteg 20 erstrecken sich in Funktionsstellung der Federklammer 17 jeweils quer zur Achse von Anschlußstutzen 11 und Kraftstoffeinspritzventil 12. Von jedem Federschenkel 18,19 steht ein nach innen gerichteter Lappen 21 bzw. 22 etwa rechtwinklig ab, der mit einer an die Umfangsnut 14 im Ventilgehäuse 15 angepaßten Kontur 23 bzw. 24 in diese eingreift. Wie insbesondere aus Fig. 3 und 4 ersichtlich ist, weisen die Federschenkel 18,19 jeweils eine in Längsrichtung sich erstreckende rechteckförmige Durchbrechung 25 bzw. 26 auf, deren Breite so bemessen ist, daß der Verriegelungsbund 13 am Anschlußstutzen 11 durch die Durchbrechungen 25,26 hindurchzutreten vermag und somit auf beiden Seiten von den Federschenkeln 18,19 übergriffen wird. Die Federschenkel 18,19 sind in ihrem zum Anschlußstutzen 11 weisenden Längskantenbereich schräg nach außen abgewinkelt, so daß sie leicht, vorzugsweise maschinell, auf die Anschlußstutzen aufgeschoben werden können. Von beiden Längskanten des Federstegs 20 erstrecken sich quer zu diesen in einander entgegengesetzten Richtungen zwei Blechsegmente 27,28 etwa parallel zu den fluchtenden Achsen von Anschlußstutzen 11 und Kraftstoffeinspritzventil 12. Jedes Blechsegment 27,28 trägt mittig einen längsverlaufenden Schlitz 29 bzw. 30, der zu dem vom Federsteg 20 abgekehrten freien Ende des Blechsegments 27 bzw. 28 hin offen ist. Das zum Kraftstoffeinspritzventil 12 hin gerichtete rechteckförmige Blechsegment 28 ist dabei in dem vom Federsteg 20 abgekehrten Endbereich nach innen umgebogen.

Korrespondierend mit den Schlitzen 29,30 ist außen an jedem Anschlußstutzen 11 eine Axialrippe 31 und außen am Ventilgehäuse 15 eines jeden Kraftstoffeinspritzventils 12 ein radial vorspringender Nocken 32 angeordnet. Die einerseits in die Umfangsnut 14 am Ventilgehäuse 15 und andererseits am Verriegelungsbund 13 des Anschlußstutzens 11 eingerastete Federklammer 17 umgreift mit dem Schlitz 29 im Blechsegment 27 die Axialrippe 31 und mit dem abgewinkelten Ende des Schlitzes 30 im Blechsegment 28 den Nocken 32 jeweils in Umfangsrichtung formschlüssig. Damit verriegelt die Federklammer 17 das Kraftstoffeinspritzventil 12 am Anschlußstutzen 11 sowohl in Axialrichtung als auch in Umfangsrichtung, so daß es ohne äußeren Kraftaufwand weder in Axialrichtung abgezogen noch in Umfangsrichtung verdreht werden kann. Axialrippe 31 und Nocken 32 sind dabei an definierter Position angebracht, so daß das als Mehrstrahlventil ausgebildete Kraftstoffeinspritzventil 12 nach Verrastung am Ansaugstutzen 11 bezüglich seiner Strahlebenen exakt zur Ansauggeometrie in der Brennkraftmaschine positioniert ist.

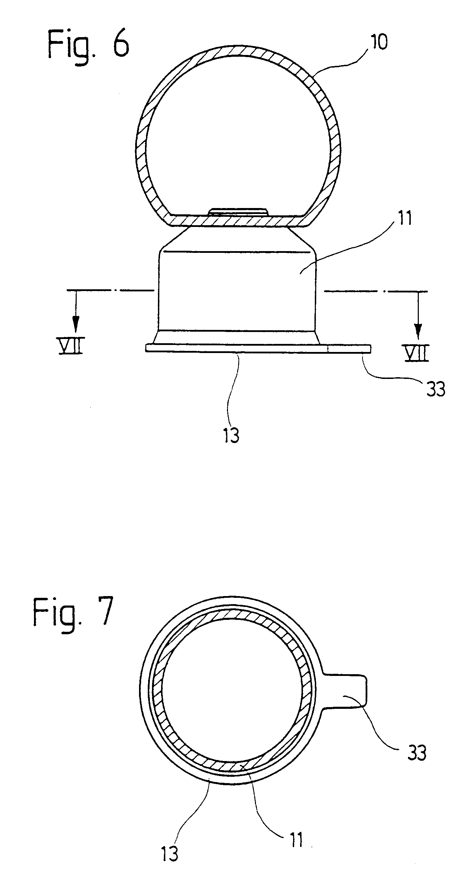

Bei der in Fig. 6 und 7 dargestellten Kraftstoffeinspritzeinrichtung trägt der Anschlußstutzen 11 des Kraftstoffverteilers 10 anstelle einer Axialrippe eine Nase 33, die radial vom Verriegelungsbund 13 absteht. Die Federklammer 17 gemäß Fig. 3 und 5 umgreift in ihrer Verriegelungsposition mit dem Schlitz 29 im Blechsegment 27 die Nase 33 in Umfangsrichtung formschlüssig, so daß auch hier eine zusätzliche Sicherung gegen Verdrehung des im Anschlußstutzen 11 eingesetzten Kraftstoffeinspritzventils 12 in Umfangsrichtung gegeben ist.

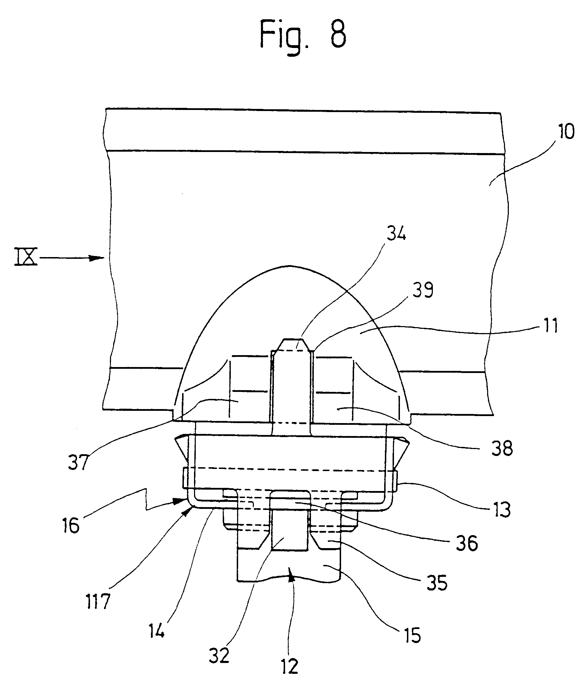

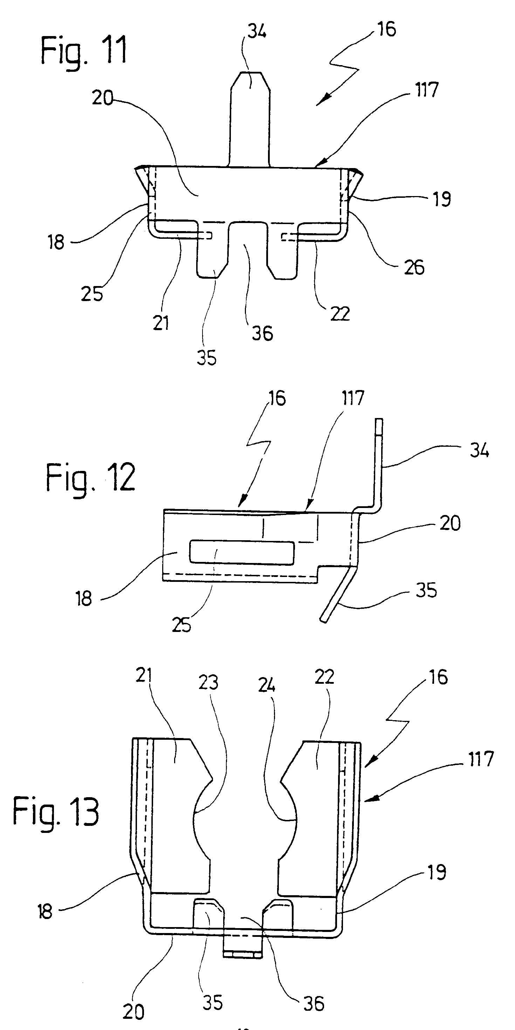

In Fig. 8 - 10 ist ein weiteres Ausführungsbeispiele einer Kraftstoffeinspritzeinrichtung dargestellt, bei welcher jedes in den Anschlußstutzen 11 des Kraftstoffverteilers 10 eingesetzte Kraftstoffeinspritzventil 12 mittels eines ebenfalls als Federklammer 117 ausgebildeten Verbindungsglieds 16 gemäß Fig. 11 - 13 in Achs- und Umfangsrichtung unverschieblich gehalten ist. Soweit diese Kraftstoffeinspritzeinrichtung mit der in Fig. 1 - 5 dargestellten Kraftstoffeinspritzeinrichtung übereinstimmt, sind gleiche Bauteile mit gleichen Bezugszeichen versehen.

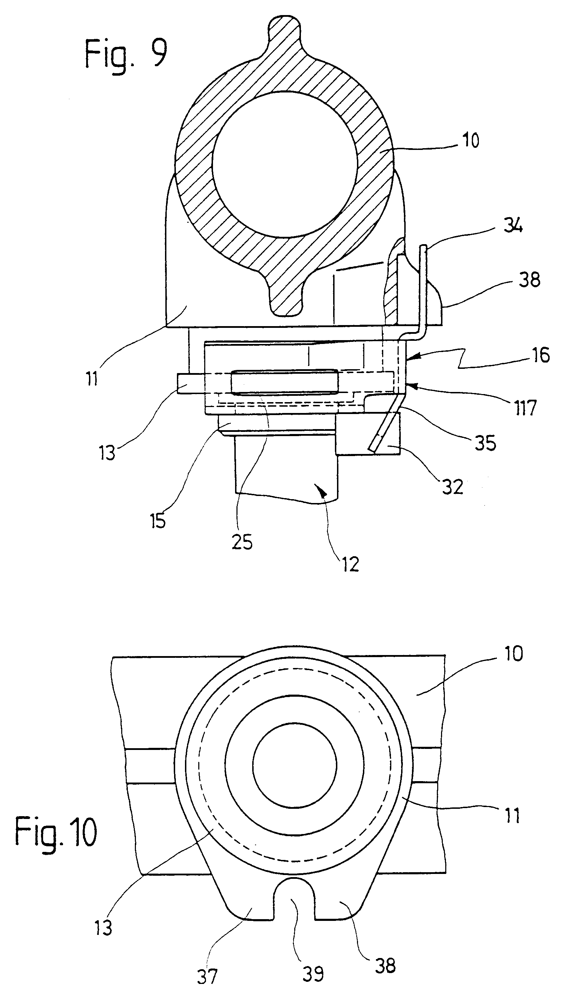

Als Fixierelement zum Fixieren des Kraftstoffeinspritzventils 12 gegen Verdrehung in Umfangsrichtung erstreckt sich bei der Federklammer 117 von der einen Längskante des Federstegs 20 aus in Richtung des Anschlußstutzens 11 und etwa parallel zu dessen Achse ein Zunge 34, während von der gegenüberliegenden Längskante des Federstegs 20 ein Blechsegment 35 abgeht und sich in Richtung des Kraftstoffeinspritzventils 12 unter einem zu dessen Achse geneigten Winkel erstreckt. Das Blechsegment 35 ist mit einem ein weiteres Fixierelement bildenden Schlitz 36 versehen, der zum freien Ende des Blechsegments 35 hin offen ist. Am Ventilgehäuse 15 des Kraftstoffeinspritzventils 12 ist wiederum ein Nocken 32 vorgesehen, der radial am Ventilgehäuse 15 vorsteht und von dem Schlitz 36 des Blechsegments 35 in Umfangsrichtung formschlüssig umgriffen wird. Am Anschlußstutzen 11 stehen in Radialrichtung zwei zueinander parallel verlaufende Vorsprünge 37,38 vor, die zwischen sich eine in Axialrichtung verlaufende Ausnehmung 39 einschließen. In diese Ausnehmung 39 greift die Zunge 34 an der Federklammer 117 in Umfangsrichtung weitgehend spiellos ein. Zur axialen Verriegelung des Kraftstoffeinspritzventils 12 im Anschlußstutzen 11 übergreift die Federklammer 17 wiederum mit ihren Durchbrechungen 25,26 in den Federschenkeln 18,19 den Verriegelungsbund 13 (Fig. 9).

Die Erfindung ist nicht auf die beschriebenen Ausführungsbeispiele beschränkt. So kann der Kraftstoffverteiler 10 aus Aluminium hergestellt und auch die Federklammern 17 als Kunststoffspritzteil ausgebildet sein.

## Patentansprüche

1. Kraftstoffeinspritzeinrichtung für Brennkraftmaschinen mit einem Kraftstoffverteiler (10), der eine Mehrzahl von jeweils einen radial überstehenden Verriegelungsbund (13) tragenden Anschlußstutzen (11) aufweist, mit einer Mehrzahl von Kraftstoffeinspritzventilen (12), die mit ihrem einen eine Anschlußöffnung enthaltenden Stirnende in jeweils einen Anschlußstutzen (11) flüssigkeitsdicht eingesetzt sind, und mit einem Verbindungsglied (16), das zur Halterung des Kraftstoffeinspritzventils am Anschlußstutzen einerseits in eine Umfangsnut (14) am Ventilgehäuse (15) eingreift und andererseits den Verriegelungsbund (13) übergreift, dadurch gekennzeichnet, daß am Ventilgehäuse (15) einerseits und am Anschlußstutzen (11) andererseits jeweils ein Formelement (31,32,33;39) an definierter Position angebracht ist und daß das Verbindungsglied (16) zwei in jeweils eines der Formelemente (31,32;33;39) ein- oder diese in gleicher Weise umgreifende Fixierelemente (29,30;34;36) träft, die so angeordnet sind, daß bei am Anschlußstutzen (11) gehaltenem Kraftstoffeinspritzventil (12) letzteres eine vorbestimmte Lage einnimmt.

2. Einrichtung nach Anspruch 1, dadurch gekennzeichnet, daß die Formelemente am Anschlußstutzen (11) und Ventilgehäuse (15) als im wesentlichen in Achsrichtung sich erstreckende, radial vom Anschlußstutzen (11) bzw. vom Ventilgehäuse (15) abstehende Stege, Nocken oder Rippen (31,32) und die beiden Fixierelemente am Verbindungsglied (16) als im wesentlichen in Achsrichtung sich erstreckende, an voneinander abgekehrten Stirnseiten offene Schlitze (29,30) ausgebildet sind.

3. Einrichtung nach Anspruch 1, dadurch gekennzeichnet, daß das eine Fixierelement am Verbindungsglied (16) als eine in Achsrichtung sich erstreckende Zunge (34) und das andere Fixierelement als ein in Achsrichtung sich erstreckender, stirnseitig offener Schlitz (36) ausgebildet ist, und daß das mit der Zunge (34) korrespondierende Formelement am Anschlußstutzen (11) von einer durch zwei radiale Vorsprünge (37,38) begrenzten Ausnehmung (39) und daß mit dem Schlitz (36) korrespondierende Formelement am Ventilgehäuse (15) von einem am Ventilgehäuse (15) radial vorspringenden Nocken (32) gebildet ist.

4. Einrichtung nach Anspruch 1, dadurch gekennzeichnet, daß das Formelement am Anschlußstutzen (11) als eine vom Verriegelungsbund (13) radial wegstehende Nase (33) und das Formelement am Ventilgehäuse (15) als ein in Achsrichtung sich erstreckender, radial am Ventilgehäuse (15) vorstehender Nocken (32) und die Fixierelemente am Verbindungsglied (16) als in Achsrichtung sich erstreckende, an voneinander abgekehrten Stirnseiten offene Schlitze (29,30) ausgebildet sind.

5. Einrichtung nach einem der Ansprüche 1 - 4, dadurch gekennzeichnet, daß das Verbindungsglied (16) als U-Förmige Federklammer (17;117) mit zwei Federschenkeln (18,19) und einem diese verbindenden, quer zur Achse von Ventilgehäuse (15) und Kraftstoffeinspritzventil (12) verlaufenden Federsteg (20) ausgebildet ist, daß von jedem Federschenkel (18,19) ein nach innen gerichteter Lappen (21,22) etwa rechtwinklig absteht, der mit einer an die Umfangsnut (14) im Ventilgehäuse (15) angepaßten Kontur (23,24) in diese eingreift, daß die Federschenkel (18,19) jeweils eine in Längsrichtung sich erstreckende Durchbrechung (25,26) zum Hindurchtreten des Verriegelungsbundes (13) am Anschlußstutzen (11) aufweist und daß die Fixierelemente (31,32;33;39) etwa in Stegmitte sich quer zum Federsteg (20) und miteinander fluchtend erstrecken.

6. Einrichtung nach Anspruch 5, dadurch gekennzeichnet, daß die Federschenkel (18,19) in ihrem zum Anschlußstutzen (11) weisenden Längskantenbereich schräg nach außen abgewinkelt sind.

7. Einrichtung nach Anspruch 5 oder 6, dadurch gekennzeichnet, daß die Federklammer (17;117) aus einem Blechstanzteil gefertigt oder als Kunststoffspritzteil ausgebildet ist.

## Claims

1. Fuel injection device for internal combustion engines having a fuel distributor (10) which has a multiplicity of connecting pieces (11) bearing in each case a radially protruding locking collar (13), having a multiplicity of fuel injection valves (12) which are inserted fluid-tightly with their end face containing a connecting opening in each case into a connecting piece (11), and having a connecting element (16) which on the one hand engages in a circumferential groove (14) on the valve housing (15) for the purpose of fixing the fuel injection valve on the connecting piece and on the other hand engages over the locking collar (13), characterised in that in each case a moulded element (31, 32, 33; 39) is applied in a defined position on the valve housing (15) on the one hand and on the connecting piece (11) on the other hand, and in that the connecting element (16) bears two fixing elements (29, 30; 34; 36) engaging in or in the same way around one of the moulded elements (31, 32; 33; 39), said fixing elements being arranged in such a way that when the fuel injection valve (12) is fixed to the connecting piece (11), said fuel injection valve assumes a predetermined position.

2. Device according to Claim 1, characterised in that the moulded elements on the connecting piece (11) and valve housing (15) are constructed as webs, cams or ribs (31, 32) extending essentially in the axial direction and protruding radially from the connecting piece (11) or from the valve housing (15), and the two fixing elements on the connecting element (16) are constructed as slots (29, 30) extending essentially in the axial direction and open at end sides facing away from one another.

3. Device according to Claim 1, characterised in that the one fixing element on the connecting element (16) is constructed as a tongue (34) extending in the axial direction and the other fixing element is constructed as a slot (36) extending in the axial direction and open on the end side, and in that the moulded element corresponding to the tongue (34), on the connecting piece (11) is formed from a recess (39) delimited by two radial projections (37, 38), and in that the moulded element, corresponding to the slot (36), on the valve housing (15) is formed by a radially projecting cam (32) on the valve housing (15).

4. Device according to Claim 1, characterised in that the moulded element on the connecting piece (11) is constructed as a nose (33) protruding radially from the locking collar (13) and the moulded element on the valve housing (15) is constructed as a cam (32) extending radially in the axial direction and protruding radially on the valve housing (15), and the fixing element on the connecting element (16) is constructed as slots (29, 30) extending in the axial direction and open at end sides facing away from one another.

5. Device according to one of Claims 1-4, characterised in that the connecting element (16) is constructed as U-shaped spring clip (17; 117) having two spring legs (18, 19) and a spring web (20) connecting the latter and running transversely to the axis of the valve housing (15) and fuel injection valve (12), in that a tab (21, 22) directed towards the inside sticks out from each spring leg (18, 19) approximately at right angles, said tab engaging in the annular groove (14) in the valve housing (15) with a contour (23, 24) matched to said annular groove, in that the spring legs (18, 19) each have one opening (25, 26) extending in the longitudinal direction for penetrating the locking collar (13) on the connecting piece (11) and in that the fixing elements (31, 32; 33; 39) extend transversely to the spring web (20) approximately in the web centre and flush with one another.

6. Device according to Claim 5, characterised in that the spring legs (18, 19) are angled off obliquely towards the outside in their longitudinal edge region pointing towards the connecting piece (11).

7. Device according to Claim 5 or 6, characterised in that the spring clip (17; 117) is produced from a sheet metal part or constructed as plastic injection moulded part.

## Revendications

1. Dispositif d'injection de carburant pour des moteurs à combustion interne, comportant un distributeur de carburant (10) muni de plusieurs manchons de raccordement (11) portant une collerette de verrouillage (13) radialement en saillie, plusieurs injecteurs de carburant (12) dont la face frontale avec l'orifice de raccordement sont logés dans un manchon de raccordement (11) de manière étanche au liquide, et un organe de liaison (16) qui sert d'une part à la fixation de l'injecteur dans le manchon de raccordement, en venant dans la rainure périphérique (14) du corps (1) de l'injecteur et qui d'autre part passe par dessus la collerette de verrouillage (13), dispositif caractérisé par un élément de forme (31, 32, 33 ; 39) prévu d'une part sur le corps d'injecteur (15) et d'autre part, sur le manchon de raccordement (11), dans une position déterminée et l'organe de liaison (16) porte deux éléments de fixation (29, 30, 34, 36) venant dans chacun des éléments de forme (31, 32, 33, 39) ou entourant ceux-ci, ces éléments de fixation étant disposés de manière que l'injecteur (12) porté par le manchon de raccordement (11) soit dans une position déterminée.

2. Dispositif selon la revendication 1, caractérisé en ce que les éléments de forme du manchon de raccordement (11) et du corps d'injecteur (15) sont constitués par des nervures, cames ou entretoises (31, 32) s'étendant essentiellement dans la direction axiale, en étant en saillie dans la direction radiale par rapport au manchon de raccordement (11) ou au corps d'injecteur (15) et les deux éléments de fixation sur l'organe de liaison (14) sont des fentes (29, 30) s'étendant essentiellement dans la direction axiale, et qui sont ouvertes sur des faces opposées.

3. Dispositif selon la revendication 1, caractérisé en ce qu'un élément de fixation sur l'organe de liaison (16) est une languette (34) s'étendant dans la direction axiale et l'autre élément de fixation est une fente (36) ouverte dans la face avant et s'étendant dans la direction axiale, et l'élément de forme correspondant à la languette (34) sur le manchon de raccordement (11) est formé par une cavité (39) délimitée par deux saillies radiales (37, 38) et l'élément de forme correspondant à la fente (36) est réalisé sur le corps d'injecteur (15) par un ergot (32) radialement en saillie par rapport au corps d'injecteur (15).

4. Dispositif selon la revendication 1, caractérisé en ce que l'élément de forme du manchon de raccordement (11) est un bec (33) radialement en saillie par rapport à la collerette de verrouillage (13) et l'élément de forme du corps d'injecteur (15) est un ergot (32) s'étendant dans la direction axiale, en étant radialement en saillie par rapport au corps d'injecteur (15) et les éléments de fixation sont des fentes ouvertes (29, 30) sur les faces opposées et s'étendant dans la direction axiale.

5. Dispositif selon l'une des revendications 1 à 4, caractérisé en ce que l'organe de liaison (16) est une pince élastique (17, 117) en forme de U avec deux branches élastiques (18, 19) et une entretoise élastique (20) reliant les deux branches, transversalement à l'axe du corps d'injecteur (15) et de l'injecteur (12), et sur chaque branche élastique (18, 19) il y a une languette (21, 22) dirigée vers l'intérieur, sensiblement à l'équerre, cette languette étant destinée à se loger dans la rainure périphérique (14) du corps d'injecteur (15) par un contour adapté (23, 24), la branche élastique (18, 19) ayant un passage (25, 26) s'étendant dans la direction longitudinale, pour la traversée de la collerette de verrouillage (15) sur le manchon de raccordement (11) et les éléments de fixation (31, 32, 33 ; 39) s'étendent au milieu de l'entretoise, transversalement à cette entretoise (20) en étant alignés.

6. Dispositif selon la revendication 5, caractérisé en ce que les branches élastiques (18, 19) sont recourbées en biais vers l'extérieur dans la sone de leur arête longitudinale tournée vers le manchon de raccordement (11).

7. Dispositif selon la revendication 5 ou 6, caractérisé en ce que la pince élastique (17, 117) est une pièce en tôle matricée ou une pièce en matière synthétique injectée.

Fig. 1

Fig. 2

Fig. 3

Fig. 4

Fig. 5

## Fig. 6

10

11

VII

VII

33

13

## Fig. 7

33

11

13

# Fig. 8

Fig. 9

Fig. 10

Fig. 11

Fig. 12

Fig. 13